Europäisches Patentamt

European Patent Office

Office européen des brevets

(11) Publication number: **0 480 591 A2**

# EUROPEAN PATENT APPLICATION

(21) Application number: **91308560.1**

(22) Date of filing: **19.09.91**

(51) Int. Cl.5: **B01D 36/00**

(30) Priority: **12.10.90 JP 106521/90**

(43) Date of publication of application:
**15.04.92 Bulletin 92/16**

(84) Designated Contracting States:
**DE FR GB**

(71) Applicant: **Mitsubishi Oil Company, Limited**
**no. 2-4, Toranomon 1-chome**
**Minato-ku Tokyo(JP)**

(72) Inventor: **Yano, Hisashi**
**1019-233, Aza Araisawa, Kuden-cho,**
**Sakae-ku**
**Yokohama-shi, Kanagawa(JP)**

Inventor: **Fujioka, Mitulu**
**184-4, Kosuzume-cho, Totsuka-ku**
**Yokohama-shi, Kanagawa(JP)**
Inventor: **Kitada, Akiharu**
**6, Kitaterao 6-chome Tsurumi-ku**
**Yokohama-shi Kanagawa(JP)**
Inventor: **Kuwabara, Ryuzi**
**35-1, Matsumi-cho 1-chome, Kanagawa-ku**
**Yokohama-shi, Kanagawa(JP)**

(74) Representative: **Charlton, Peter John et al**
**Elkington and Fife Prospect House 8**
**Pembroke Road**
**Sevenoaks, Kent TN13 1XR(GB)**

(54) **Oil filter having gas separator.**

(57) An oil filter is provided, the oil filter being of the type which comprises a housing (10) opened at one end thereof, a cylindrical first separator unit (A) disposed in the housing for removing solid contaminants from an oil introduced into the housing, and a second separator unit (B) disposed within the first separator unit for removing gaseous contaminants from the oil that has passed through the first separator unit, the second separator unit (B) including a funnel-shaped cyclone (38) defining a chamber (42) arranged to generate a vortical flow of the oil introduced therein to thereby separate gas-rich oil and a removal pipe (50) extending into the chamber (42) along an axial centre thereof for discharging the gas-rich oil. A plurality of elongated pores (54) are formed in a wall of the cyclone (38) defining the chamber (42) for allowing the oil containing little gaseous contaminants to flow out of the cyclone (38). The elongated shape of the pore (54) enables reduction in the number of pores to be formed without affecting the gas separating function and, therefore, facilitates manufacture of the cyclone both in the work and cost involved.

FIG.2

The present invention relates to an oil filter to be incorporated in a lubricating system for an internal combustion engine or the like and, more particularly, to an improvement in an oil filter of the type which can remove not only solid contaminants but also gaseous contaminants from the oil.

In machinery for construction, transportation and the like using lubricant, such as engines and various hydraulic devices, solid contaminants and gaseous contaminants have hitherto been removed from lubricant by separate devices and/or in different portions of the machinery. An integrated device has thus been desired which can remove both of the solid and gaseous contaminants effectively and which can be installed in a limited space of the machinery.

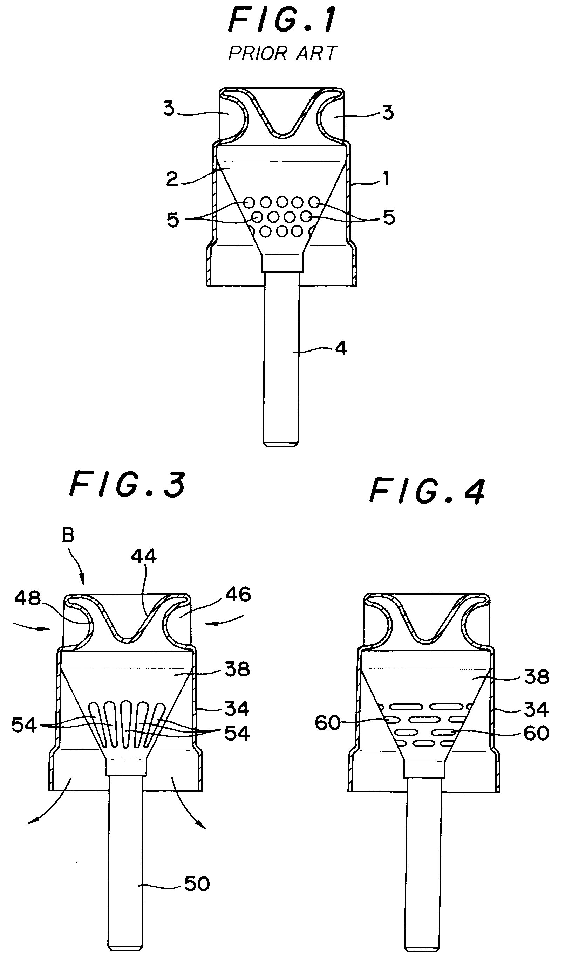

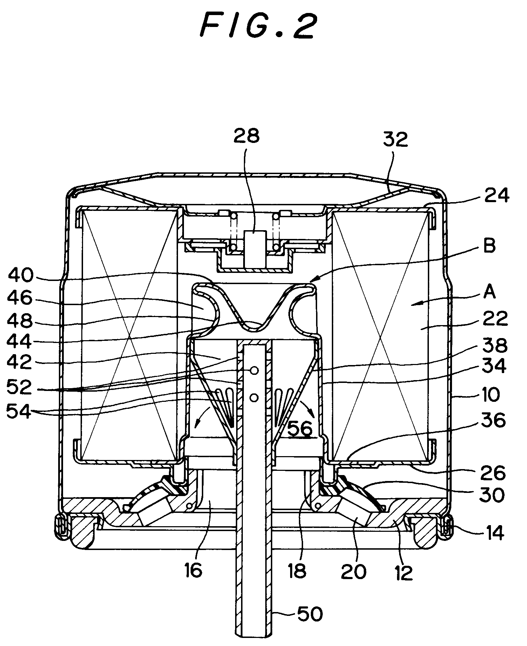

The inventors herein have proposed such an integrated device which is disclosed in a U.S. Patent No. 4,865,632 owned by Mitsubishi Oil Co., Ltd. and issued September 12, 1989. A similar device is also disclosed in a Japanese Patent Laid-Open Publication No. 2-173307 of July 4, 1990 and in the corresponding European Patent Application published under No. 0376443. The device comprises a first separator for filtering lubricant which is pumped into a housing to thereby remove solid contaminants, and a second separator for removing gaseous contaminants from the filtered oil by utilizing a centrifugal force. Specifically, the second separator in the known device has a structure substantially as illustrated in FIG. 1 of the accompanying drawings. It comprises a cylindrical casing 1 having a lower open end and a funnel-shaped cyclone 2 disposed within the casing 1 to define a chamber and fixed to the inner surface of casing 1 at the upper vertical end portion. A plurality of inlets 3 are formed through the side wall of the casing 1 above the cyclone 2 in such a manner that the oil flows into the chamber with a vortical pattern. A removal pipe 4 extends into the chamber along a center axis of the cyclone 2 and has an upper end portion (not shown) which is provided with a number of orifices. Also, the cyclone 2 is formed through the wall thereof with a number of circular pores 5. The oil from the inlets 3 flows in the chamber toward its tapered end with the vortical pattern, during which a centrifugal force acts on the oil. Thus, gas-rich oil having a smaller specific gravity gathers in a central area of the chamber and is discharged via the removal pipe 4. On the other hand, an oil containing little gaseous contaminants and therefore having a larger specific gravity gathers in a peripheral area of the chamber to flow out of the cyclone 2 through the pores 5, being supplied for lubrication via the lower open end of casing 1 and a passage (not shown) connected thereto.

In the above proposed device, it is important to ensure that the oil dwells in the chamber for such a period of time as to cause the separation of gas-rich oil satisfactorily. The dwell time is determined by a pressure loss of the oil flow which in turn depends on a size of the circular pore 5. The experiments has shown that the size should considerably be small with large number of the pores for maintaining the sufficient oil flow. Accordingly, manufacture of the cyclone 2 requires a delicate work and a die for use in the manufacture becomes complicated and expensive.

The present invention has been accomplished in view of the foregoing, and therefore its object is to provide an improved oil filter of the above type which can easily be manufactured with an economical die without affecting a gas separating function.

According to the present invention, an oil filter comprises a housing opened at one end thereof, a cylindrical first separator unit disposed in the housing for removing solid contaminants from the oil introduced into the housing, and a second separator unit disposed within the first separator unit for removing gaseous contaminants from the oil that has passed through the first separator unit, the second separator unit including a funnel-shaped cyclone defining a chamber adapted to generate a vortical flow of the oil introduced therein to thereby separate gas-rich oil and a removal pipe extending into the chamber along an axial center thereof for discharging the gas-rich oil. The improvement resides in a plurality of elongated pores formed in a wall of the cyclone defining the chamber for allowing an oil containing little gaseous contaminants to flow out of the cyclone.

An opening area of each elongated pore is significantly larger than that of the prior art circular pore. This means that a reduced number of the elongated pore is enough to achieve a rate of hole area of the same level as in the prior art, and therefore to maintain the necessary amount of oil flowing out of the cyclone while securing a dwell time of the oil in the chamber sufficient to achieve the separation of gas-rich oil. Consequently the number of the pore can be reduced, so that a manufacture of the cyclone may be facilitated and a die therefor can be made economically as compared with the cyclone in the prior art oil filter. This is true because of the funnel shape of the cyclone, and the elongated pore can be formed more easily than a circular pore of enlarged size.

In one embodiment of the invention, the pore has a longitudinal axis extending along the axial direction of the cyclone. It may be in the form of an inverted tear drop tapering toward the lower end thereof, or may have a substantially uniform width through the entire length thereof.

Alternatively, the pore may have a longitudinal axis extending along the circumferential direction of the cyclone. Plural rows of the pores may be arranged in the axial direction of the cyclone, each row extending along the circumferential direction thereof.

Other objects, features and advantages of the invention will be apparent from the following description of the preferred embodiments thereof when taken in conjunction with the accompanying drawings.

FIG. 1 is an enlarged schematic view of a second separator unit in a prior art oil filter, with only a casing in section;

FIG. 2 is a longitudinally sectioned elevational view illustrating an oil filter according to an embodiment of the invention;

FIG. 3 is an enlarged schematic view of a second separator unit in the oil filter of FIG. 2, with only a casing in section; and

FIG. 4 is a view similar to FIG. 3 showing an alternative form of the second separator unit.

Referring now to FIG. 2 of the drawings, an oil filter according to a preferred embodiment of the invention has a housing 10 of substantially cylindrical shape having a lower open end and an upper closed end. A base plate or disk 12 is secured to an inner peripheral surface of the housing 10 at a position near its lower end and is fixedly supported by means of a ring member 14 of which outer edge is seamed with the lower edge of the housing 10. The base plate 12 is formed with a central opening 16 defined by an upwardly projecting circular wall 18 which is adapted to be used for the installation of the housing on a mount block (not shown). Plural apertures 20 are provided in the base plate 12 radially outward of the opening 16 to communicate with an oil pump (not shown) via a passage in the mount block, so that an oil is introduced into the housing 10 through the apertures 20. On the other hand, the central opening 16 is connected to, for example, an oil gallery in an engine (not shown) through another passage in the mount block.

Arranged within the housing 10 are a separator unit A for separating or filtering solid contaminants from the oil circulating in a lubricating system of a machine such as the engine, and a separator unit B for separating gaseous contaminants in the oil. The separator unit A is of usual type and comprises a filter element 22, an upper end plate 24 and a lower end plate 26 both fixed to the element 22. The filter element 22 has a hollow cylindrical shape and is typically formed of a pleated sheet of paper. The upper end plate 24 extends radially inward to support a relief valve 28 which is positioned substantially at a radial center of the housing 10. This relief valve 28 is adapted to open and provide a bypass passage for the oil when a pressure of oil is increased outside the filter element 22 due to a clogging thereof, so that the oil may flow through the valve 28 into the space defined within the element 22. On the other hand, the lower end plate 26 extends to the wall 18 where a check valve 30 is secured for preventing a reverse flow of the oil from the housing 10 into the passage formed in the mount block via the apertures 20. The unit A is held in position by a leaf spring 32 which is compressed between the upper end of the housing 10 and the upper end plate 24.

The separator unit B is disposed at the center of the housing 10 coaxially with the separator unit A. The unit B includes a cylindrical casing 34 of which lower end portion has an outwardly extending flange 36 that is secured to the end plate 26. A funnel-shaped member or cyclone 38 is housed within the casing 34 and is attached at its upper vertical portion to the peripheral surface of the casing 34, defining together with a bottom wall 40 of the casing 34 a chamber 42 which is adapted to generate a vortical flow of the oil as described hereinafter. The bottom wall 40 has at a center thereof a concave portion 44 projecting into the chamber 42. Formed through the peripheral wall of the casing 34 at a position above the cyclone 38 are a plurality of circumferentially spaced inlets 46 for introducing the oil into the chamber 42. The inlet 46 is formed by punch press with providing a guide plate or deflector 48 extending inwardly relative to a tangent of the casing 34 at the inlet 46, so that the oil introduced therethrough flows in a vortical pattern. The concave portion 44 preferably extends to a level equal to or below the inlet 46 in order to fully contribute to the generation of vortical flow.

A removal pipe 50 having an upper closed end extends in the opening 16 and projects into the cyclone 38. The lower vertical portion of cyclone 38 is fixed to the removal pipe 50 to orient the latter along the axial center of the chamber 42. An upper end portion of removal pipe 50 is perforated to provide a number of orifices 52 which communicates the chamber 42 with the interior of the removal pipe 50. This pipe 50 is connected to, for example, an oil pan (not shown) through a further passage in the mount block. Formed through the wall of lower portion of cyclone 38 are a number of pores 54 which connect the chamber 42 with a space 56 defined between the cyclone 38 and the casing 34, the space 56 communicating with the central opening 16. As clearly seen from FIG. 3, each of the pores 54 is elongated to have a longitudinal axis extending along the axial direction of the cylindrical casing 34. More specifically, each pore 54 has a shape similar to an inverted tear drop tapering toward the lower end, as the cyclone 38 reduces its diameter to the lower end. These-ores 54 may be formed by punch pressing.

When the oil is supplied by the pump (not shown), it flows into the oil filter through the apertures 20 and the check valve 30. The oil then passes through the filter element 22 from the outside to inside during which solid contaminants are removed from the oil. The thus filtered oil flows in the space between the element 22 and casing 34 and is introduced into the chamber 42 through the inlets 46 which, together with the deflector 48, contributes to the creation of vortical flow. The oil flows downward in the chamber 42 with the vortical pattern, generating a centrifugal force which acts on the oil. Due to a difference in density, the oil containing gaseous contaminants, i.e. gas-rich oil, is separated and gathers near the axial center of the flow where it is introduced through the orifices 52 into the removal pipe 50 for discharge into the oil pan. On the other hand, the remaining oil, which contains little gaseous contaminants, flows around the wall of cyclone 38 and passes through the pores 54 into the space 56 for circulation in the lubricating system via the central opening 16.

It is to be noted here that the elongated pore 54 has an increased area as compared with the circular pore in the prior art oil filter. This means that the number of pores 54 can be reduced while maintaining a total hole area of the pores and a pressure loss of the oil flow at substantially the same level as in the prior art oil filter, with achieving a dwell time of the oil flow in the chamber 42 sufficient to separate the gaseous contaminants. Consequently, manufacture of the cyclone 38 is facilitated, and a punch die for use in the manufacture of the cyclone can be made at a reduced cost with a simplified work for maintenance.

The elongated pore may have various shapes and is not limited to the inverted tear drop form as in the above embodiment. For example, the pore may have uniform width along its length. Further, the direction in which the pore is elongated is not limited to the axial direction of the cyclone 38 but may be a circumferential direction thereof. Such an example is illustrated in FIG. 4 in which several rows of pores 60 are arranged along the axial direction of cyclone 38 and each pore 60 is elongated in the circumferential direction thereof. Each of the pores 60 in the uppermost row has the greatest length, and the length of pore 60 is reduced toward the lowermost row where the diameter of cyclone 38 is almost minimum. In any of the above alternatives, the elongated pore has larger area as compared with the circular pore in the prior art oil filter so that reduced number of the pore will be sufficient to maintain the total hole area and the pressure loss at the level of the prior art oil filter.

The cyclone 38 in the above embodiments are formed of metal material but it may also be made of plastic material with or without reinforcing fibers. When the plastic material is employed, the pores are formed during a molding process of the cyclone 38 by using pins which are attached to a molding die to extend across a cavity and are removed before a molded cyclone is released from the die. The reduced number of the pore results in a decrease of the number of the pin, facilitating the molding operation.

Although the present invention has been described with reference to the preferred embodiments thereof, many modifications and alterations may be made within the spirits of the invention.

## Claims

1. An oil filter comprising a housing opened at one end thereof, a cylindrical first separator unit disposed in said housing for removing solid contaminants from an oil introduced into said housing, and a second separator unit disposed within said first separator unit for removing gaseous contaminants from the oil that has passed through said first separator unit, said second separator unit including a funnel-shaped cyclone defining a chamber adapted to generate a vortical flow of the oil introduced therein to thereby separate gas-rich oil and a removal pipe extending into said chamber along an axial centre thereof for discharging said gas-rich oil, characterised in that a plurality of elongated pores are formed in a wall of said cyclone defining said chamber for allowing the oil containing little gaseous contaminants to flow out of said cyclone.

2. An oil filter as claimed in claim 1, wherein said pore has a longitudinal axis extending along the axial direction of said cyclone.

3. An oil filter as claimed in claim 2, wherein said pore is in the form of an inverted tear drop tapering toward the lower end thereof.

4. An oil filter as claimed in claim 2, wherein said pore has a substantially uniform width through the entire length thereof.

5. An oil filter as claimed in claim 1, wherein said pore has a longitudinal axis extending along the circumferential direction of said cyclone.

6. An oil filter as claimed in claim 5, wherein said pore has a substantially uniform width through the entire length thereof.

7. An oil filter as claimed in claim 5, wherein plural rows of said pores are arranged in the axial direction of said cyclone, each said row extending along the circumferential direction of said cyclone.

8. An oil filter as claimed in claim 7, wherein the length of said pore is gradually reduced from the uppermost row to the lowermost row.

9. A separator unit for an oil filter, said separator unit comprising a funnel-shaped cyclone defining a chamber adapted to generate a vortical flow of the oil introduced therein to separate thereby gas-rich oil and a removal pipe extending into said chamber along an axial centre thereof for discharging said gas-rich oil, characterised in that a plurality of elongated pores are formed in a wall of said cyclone defining said chamber for allowing the oil containing little gaseous contaminants to flow out of said cyclone.

# FIG.1

PRIOR ART

3 — 3

2 — 1

5 — 5

4

# FIG.3

B

48 — 44 — 46

38

54 — 34

54 — 54

50

# FIG.4

38

60 — 34

60

# FIG.2